# EUROPEAN PATENT APPLICATION

(11) **EP 4 545 266 A1**
(43) Date of publication of application: **30.04.2025**
(21) Application number: 23425059.5
(22) Date of filing: 24.10.2023
(51) Int. Cl.: B29C 31/00, B29C 33/36, B29D 35/12, B29L 31/50

(54) **SYSTEM FOR AUTOMATIC CHANGE OF MOLDS ON ROTARY TABLES**

(71) Applicant: Giampaoli, Enrico, 62018 Potenza Picena (MC) (IT)
(72) Inventor: Giampaoli, Enrico, 62018 Potenza Picena (MC) (IT)

(57) **Abstract**

This utility model "System for automatic change of moulds on rotary tables", refers to a system that allows the automatic replacement of the moulds (17) associated with articles whose production has ended with moulds (18) whose production must be started.

The utility model in question is characterised by:
- Multi-seat rotary table (1) (or carousel);
- Cartesian Robot (4) for mould replacement

At the end of the processing, the rotary table closes the upper mould (14) on the lower mould (13) obtaining the closed mould (17).

The operator shall, where necessary, remove the systems that secure the mould to the rotary table station.

At the rotary table, the station dedicated to the exchange of the moulds is identified. At this station, there is an anthropomorphic robot (4) (which in turn, during processing can be used for other operations of the production flow).

When the single closed mould reaches the unloading position (3), the robot (4) recognises that it must be unloaded.

The grippers (27) of the robot align with the gripping systems of the closed mould (17) until the closed mould (17) is completely gripped. The robot (4) then removes (30) the closed mould (17) from the rotary table (1).

The closed mould (17) is positioned by the robot (4) on a belt or other storage support (31).

The same robot (4) is used to pick up the mould (18) of the new article (32) and to position it (33) on the rotary table (1).

The use of the robot (4) for the replacement of the moulds allows the operation to be carried out without the operator carrying out manual operations of the loads, or being exposed to risks deriving from the manual execution of the operation such as bruising, falling of the mould or other.

## Description

The "System for automatic change of moulds on rotary tables" allows the change of the moulds on the rotary tables to be carried out automatically, without requiring the operator to carry out manual load handling operations.

At the end of the process of processing an article, it is necessary to replace the moulds, that is, to remove the moulds used for the production of the article whose production has ended and present on board the rotary table and to position the moulds at the different stations necessary for the production of the new article. Once the tooling phase is finished, the second article can be produced.

This solution stems from the need to improve health and safety conditions in the workplace.

The system includes a robot (4) separated from the rotary table (1) which, placed at the unloading area (3), automatically picks up and unloads the moulds of the article whose production ends, with the application of the moulds of the article to be produced.

### Prior technique

For the production of soles for footwear, technical articles, etc. rotary machines are used having a plurality of stamens arranged on rotary tables also called turret or conveyor.

In the rotary tables (1) the moulds advance in different positions (2) where the different work phases are carried out.

Each station (2) of the rotary table (1) is characterised by the presence of a support area (11), support (12) for the sealing of the lower mould, lower mould (13), an upper mould (14) which is kept raised by the sealing systems (15).

For each item, the specific mould must be used.

Consequently, when it is necessary to switch from the production of one article to another, all the moulds on board the rotary table must be replaced.

At each station, the machine closes the upper mould (14) on the lower mould (13), obtaining the closed mould (17) . The operator disconnects all the blocking parts of the moulds (and in particular disconnects the sealing system (15) of the upper mould (14)).

Currently, the mould change operations are carried out manually by the operator, who then picks up the closed mould (17), positions it on a support and installs the new mould.

This operation must be repeated for each workstation (2) of the rotary table (1)
The moulds used can be characterised by variable masses depending on the size of the mould, cavity, etc. and can even exceed 25 kg.

The market is increasingly sensitive to issues related to health and safety in the workplace.

We are therefore looking for solutions that can reduce, or if possible eliminate, the risk deriving from manual handling of loads in this phase. At present, there are no systems that allow the automatic change operations of the moulds to be carried out. These operations are carried out manually, possibly with the help of trolleys with support surfaces positioned near the rotary table (1).

Technological evolution has led to an increase in automated systems in various industrial sectors, but has not yet provided solutions to the above problem.

In particular, the use of robots has allowed many operations previously carried out by operators to be carried out automatically, and in particular in activities that require the handling of objects, loading and unloading of materials, etc.

The solution covered by this patent makes it possible to automate the mould change phase.

The robot (4) present on the rotary table (1) allows the change to be made for the different stations (2), without the operator carrying out activities that expose him to the risk of manual handling of the loads. At the end of the production process, for the moulds that must be replaced, the machine closes the upper mould (14) on the lower mould (13) obtaining the closed mould (17). The operator shall, where necessary, remove the mould fixing systems from the rotary table. The rotary table (1) allows the movement of the different stations (2) one step at a time.

When the single closed mould (17) reaches the unloading position (3), near the robot (4), the grippers (27) pick up the mould (30), move it out of the machining area (31) until it is positioned on a belt, shelf or other. The robot then picks up the mould of the article to be produced (32) and positions it (33) on the empty position of the rotary table (1).

### Summary description of the utility model

The utility model in question is characterised by:
- Multi-seat rotary table (1) (or carousel);
- Cartesian Robot (4) for mould replacement

### Brief description of the drawings

The figures that are used to illustrate this patent for the utility model are:
Fig. 1: identification of the main parts that make up the system

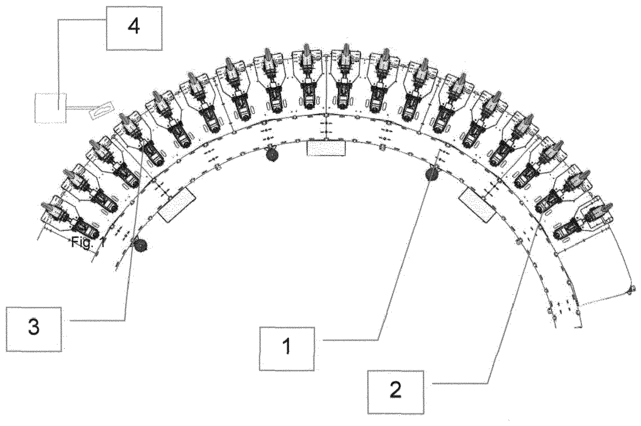

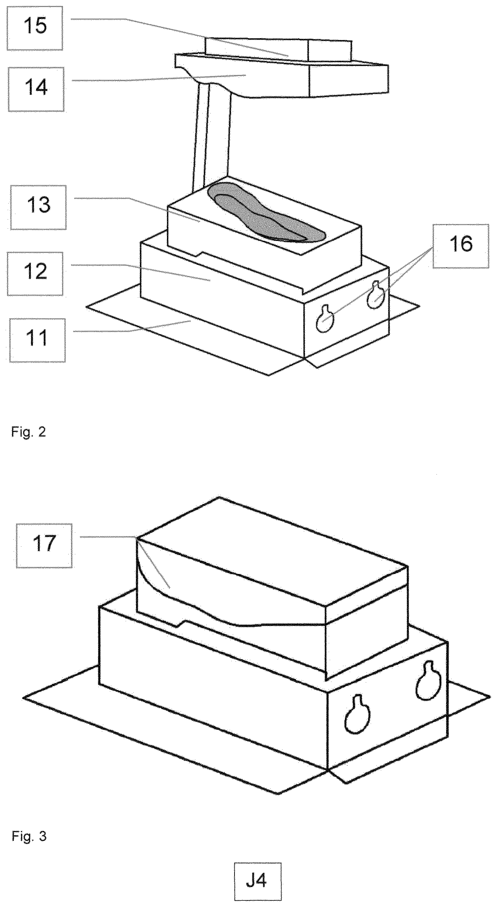

Fig. 2: description of the components present at each rotary table station (1)
Fig. 3: example of closed moulds (17)

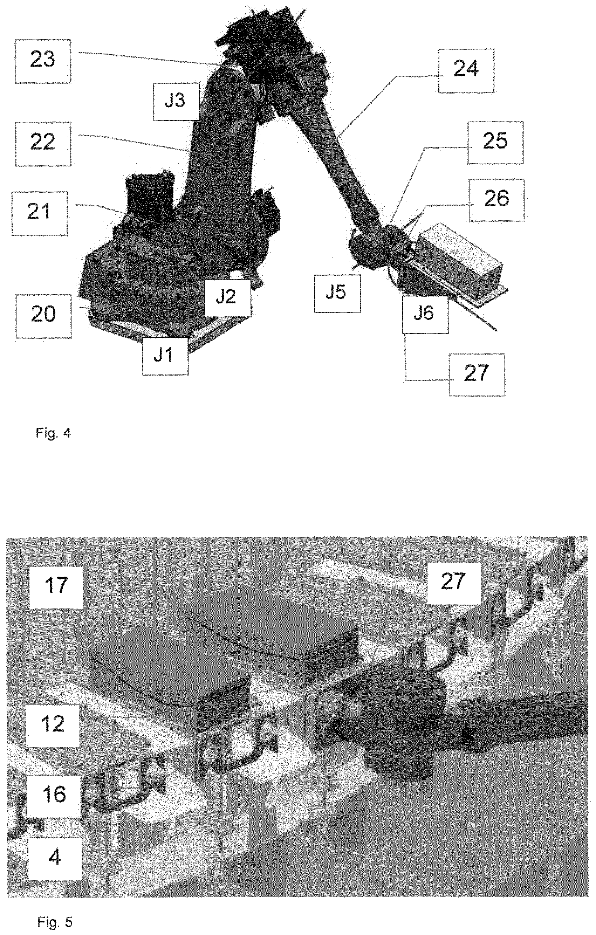

Fig. 4: example of components of the first (4)
Fig. 5: mould picking phase (17) to be replaced

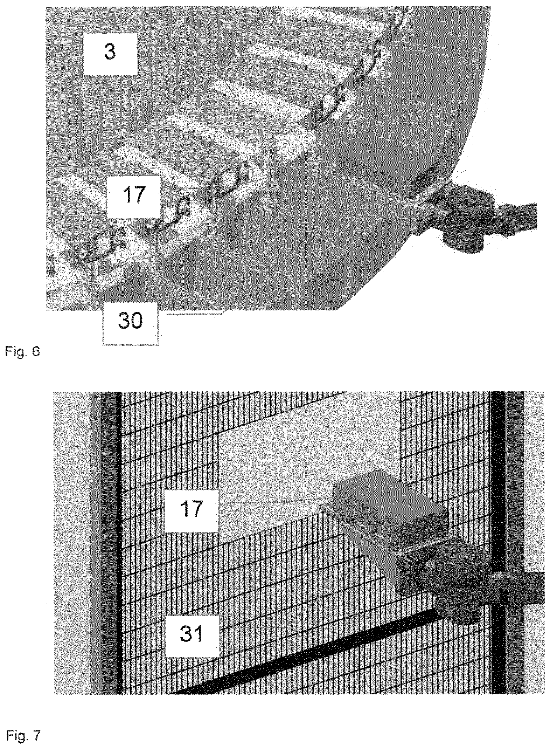

Fig. 6: phase of extraction of the mould (17) to be replaced by the rotary table (1)
Fig. 7: example of storing the mould (17) in the storage area

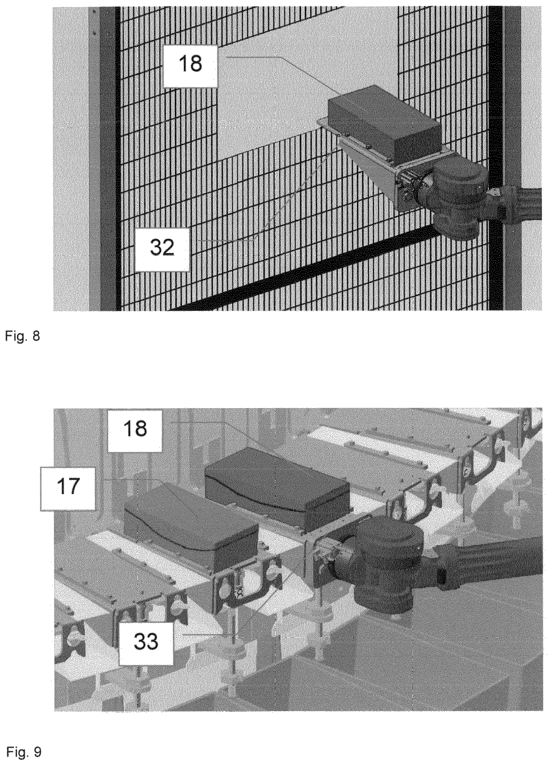

Fig. 8: example of picking the new mould from the storage area
Fig. 9: positioning the new mould on the rotary table (1)

### Detailed description of the solution

This utility model relates to the system for replacing the moulds from a rotary table carried out using a robot.

This system applies to a rotary table (turret) or conveyor (1).

On the rotary table (1) there are several stations (2) for holding the moulds and each position is characterised by a different working phase. At the end of the processing of an article, the moulds present at the different stations must be removed, with the positioning of the moulds necessary for the production of the products of the next article.

At the end of the processing, the rotary table closes the upper mould (14) on the lower mould (13) obtaining the closed mould (17).

The operator shall, where necessary, remove the systems that secure the mould to the rotary table (1) station.

At the rotary table (1), the station dedicated to the exchange of the moulds is identified. At this station, there is an anthropomorphic robot (4) (which in turn, during processing can be used for other operations of the production flow).

The robot (4) for gripping the support (12) of the closed moulds (17) comprises:
- A fixed base (20)
- A first arm (21) rotating with respect to the fixed base (20) to rotate around a first axis (J1)
- A second arm (22) mounted, rotating with respect to the first arm (21) to rotate around a second axis (J2) horizontal and orthogonal to the first axis (J1)
- A third arm (23) mounted, rotating with respect to the second arm (22) to rotate about a third axis (J3) horizontal and parallel to the axis (J2)
- A fourth arm (24) mounted, rotating with respect to the third arm (23) to rotate about the fourth axis (J4) orthogonal to the third axis (J3)
- A fifth arm (25) mounted, rotating with respect to the fourth arm (24) to rotate about the fifth axis (J5) orthogonal to the fourth axis (J4)
- A sixth axis (26) mounted, rotating with respect to the fifth arm (25) to rotate about the sixth axis (J6) orthogonal to the fifth axis (J5)
- Grippers (27) for gripping the mould (17) for holding the mould closed (17)

When the single closed mould (17) reaches the unloading position (3), the robot (4) recognises that it must be unloaded. The mould recognition methodologies can be carried out according to one of the known techniques (e.g. RFID, rotary table programming, etc.).

The grippers (27) of the robot align with the gripping systems of the closed mould (17) until the closed mould (17) is completely gripped.

The robot (4) then removes (30) the closed mould (17) from the rotary table (1).

The closed mould (17) is positioned by the robot (4) on a belt or other storage support (31).

The same robot (4) is used to pick up the mould of the new article (32) and to position it (33) on the rotary table (1).

The use of the robot (4) for the replacement of the moulds allows the operation to be carried out without the operator carrying out manual operations of the loads.

Some moulds are also characterised by masses greater than 25 kg and according to the requirements relating to health and safety in the workplace, pursuant to Legislative Decree 81/2008, these operations must be carried out by two operators.

The available spaces and the size of the moulds pose difficulties in ergonomic terms in the handling of the load, in particular for activities that must be carried out by several operators.

Carrying out article exchange operations also entails a cost for the company in terms of time and human resources employed.

This solution allows the resolution of the various problems associated with the manual change of the moulds:
- Operators are not exposed to the risk of manual handling of loads as it is the robot (4) that carries out the removal of the closed moulds (17) of the article whose production has ended and the positioning of the closed moulds associated with the new article to be produced (18).
- The time required to replace the moulds is reduced: the operation carried out by the robot (4) requires shorter execution times
- Operators are not exposed to risk deriving from the handling of materials, such as the risk of falling of the mould, contusion or other as the operation is carried out by the robot (4) which is confined inside a protective casing.

The flexibility of this application to the different types of moulds (17 and 18), rotary tables (1) and mould storage systems is due to the use of robots independent of the rotary table and free to move and rotate in space.

## Claims

1. The "System for automatic change of molds on rotary tables" consisting of
- a rotating table (1), in which, for each station, there is a support (12) for sealing the closed molds (17) which are composed of a lower mold (13) and an upper mold (14)
- a robot (4) which picks up the closed molds (17) associated with the article whose production has ended, removal from the rotary table (1), picks up the molds (18) associated with the new article to be produced and its positioning on the rotary table (1).

2. The system according to claim 1 wherein the rotary table (1), at the end of the processing of an article, closes the upper mold (14) on the lower mold (13) in order to allow the unloading of the closed mold (17) no longer needed.

3. The system according to claim 1 in which the rotary table (1), carrying out movements for each single station, positions the mold (17) to be replaced in correspondence with the unloading station (3) in correspondence with which the robot (4) is installed .

4. The system according to claim 1 wherein the robot (4) has grippers (27) capable of gripping the closed mold (17) to be removed and the closed mold (18) of the next article to be produced.

5. The system according to claim 1 wherein when the single closed mold reaches the unloading position (3), the robot (4) recognizes that it is to be unloaded, the robot grippers (27) align with the gripping systems (16 ) until the closed mold (17) is completely gripped; the robot (4) then removes (30) the closed mold (17) from the rotary table (1), and places it on a belt or other support for storage (31).

6. The system according to claim 1 wherein the robot (4) is used for the withdrawal (32) of the mold (18) of the new article from a belt or other support for storage and for its positioning (33) to edge of the rotary table (1).

7. The system according to claim 1 in which the robot (4) automatically carries out the replacement of the molds (17) associated with articles whose production has ended with the molds (18) of the articles to be produced, without the operators assigned to machine carry out any manual handling of loads
